Europäisches Patentamt

European Patent Office

Office européen des brevets

(19)

(11) Veröffentlichungsnummer: **0 132 809**
**A2**

(12)                    **EUROPÄISCHE PATENTANMELDUNG**

(21) Anmeldenummer: 84108632.5

(22) Anmeldetag: 20.07.84

(51) Int. Cl.⁴: **F 24 J 2/26**

(30) Priorität: 20.07.83 DE 3326183

(43) Veröffentlichungstag der Anmeldung:
13.02.85 Patentblatt 85/7

(84) Benannte Vertragsstaaten:
AT BE CH DE FR GB IT LI LU NL SE

(71) Anmelder: Müller, Friedrich
Im Mühlfeld 31
D-7180 Crailsheim(DE)

(72) Erfinder: Müller, Friedrich
Im Mühlfeld 31
D-7180 Crailsheim(DE)

(74) Vertreter: Lauw, Rudolf C. W.
Karwinskistrasse 1
D-8000 München 60(DE)

(54) Verfahren zur Herstellung eines Absorbers zur Wärmegewinnung oder zur Kälteerzeugung, insbesondere für einen Sonnenkollektor, ein Energiedach, einen Energiezaun oder dergleichen.

(57) Die Erfindung bezieht sich auf ein Verfahren zur Herstellung eines Absorbers zur Wärmegewinnung oder Kälteerzeugung, insbesondere für einen Sonnenkollektor, ein Energiedach, eine Energiezaun, eine Kühlvorrichtung od. dgl., mit einem Absorberblech (11) und einem an diesem angeordneten System aus flüssigkeits-durchströmten Rohrleitungen (15), die mittels einer am Absorberblech (11) angeordneten, längs desselben verlaufenden, die Wärmeübertragung bewirkenden Haltevorrichtung (12) ihrer Gebrauchslage gesichert sind, wobei als Ausgangsmaterial eine im Querschnitt eine elliptische, eiförmige, birnenförmige oder anderweitig von der Kreisform abweichende Form aufweisende Rohrleitung (15) verwendet wird, die zwischen den Wirkflanken der Haltevorrichtung (12) angeordnet und anschließend mittels einer auf ihre Wandung wirkenden Druckkraft (18, 19) derart verformt wird, daß ihre Wandung an den Wirkflanken der Haltevorrichtung (12) fest und lückenlos anliegt.

FIG.2

Croydon Printing Company Ltd.

0132809

Friedrich Müller
Im Mühlfeld 31
D-7180 Crailsheim

Verfahren zur Herstellung eines Absorbers zur Wärmegewinnung oder zur Kälteerzeugung, insbesondere für einen Sonnenkollektor, ein Energiedach, einen Energiezaun oder dergleichen

Die Erfindung bezieht sich auf ein Verfahren zur Herstellung eines Absorbers zur Wärmegewinnung oder zur Kälteerzeugung, insbesondere für einen Sonnenkollektor, ein Energiedach, einen Energiezaun, eine Kühlvorrichtung oder dergleichen, mit einem Absorberblech und einem an diesem angeordneten System aus flüssigkeitsdurchströmten Rohrleitungen, die mittels einer am Absorberblech angeordneten, längs derselben verlaufenden, die Wärmeübertragung bewirkenden Haltevorrichtung in ihrer Gebrauchslage gesichert sind.

Verfahren dieser Art sind bekannt. Beispielsweise werden stranggepreßte Profillamellen aus Aluminium mit gleichzeitig angeformten Vorrichtungen zur Halterung der Rohrleitungen und zur Wärmeübertragung vom Absorberblech zur Rohrleitung verwendet. Diese Rohrleitungen sind jedoch im Querschnitt kreisförmig und werden in ihrer Gebrauchslage durch Verformen der Haltevorrichtungen gesichert. Der Kontakt zwischen der Rohrleitung und der Haltevorrichtung des Absorberblechs bzw. des stranggepreßten Profils ist allerdings sehr mangelhaft. Schon kleinste notwendigerweise vorzusehende Fertigungstoleranzen der Rohrleitung und/oder des Absorberblechs oder gar Abweichungen hiervon verhindern einen vollkommenen Kontakt zwischen der Rohrleitung und ihrem Trägerblech schon während der Werkstattfertigung, was also schon von Anfang an eine mangelhafte und damit nicht optimale Wärmeübertragung an der Nahtfläche zwischen Trägerblech und Rohrleitung zur Folge haben muß.

Um eine wirklich intensive Verbindung zwischen Rohrleitung und Trägerblech zu erzielen, müßte die Rohrleitung in den Aufnahmeteil des Trägerbleches eingelötet werden, was einen erheblichen finanziellen Fertigungsaufwand darstellt. Aus diesem Grunde geht man vielfach dazu über, die Rohrleitung nicht mehr an ihrem Trägerblech anzulöten, sondern lediglich eine Wärmeleitpaste zwischen diesen einzubringen, deren Wirkung jedoch erfahrungsgemäß nicht sehr lange anhält.

Aufgrund der unterschiedlichen Ausdehnungen von Rohrleitung und Trägerblech bei Verwendung unterschiedlicher Materialien und/oder Materiallängen dehnen sich die einzelnen Teile des Absorbers bei Betrieb derart unterschiedlich, daß sich ihr erwünschter inniger Kontakt infolge Abriebs und Materialermüdung fortschreitend lockert und damit verschlechtert. Darüber hinaus kann der nun nicht mehr vorhandene innige Kontakt zwischen der Rohrleitung und dem Absorberblech auch dazu führen, daß bei Verwendung unterschiedlicher Materialien wegen ihrer unterscheidlichen Potentiale an den Nahtflächen Korrosion auftritt.

Aufgabe der Erfindung ist es daher, ein Verfahren der eingangs genannten Art anzugeben, mit dem man einen Absorber herstellen kann, dessen Rohrleitung am Träger- bzw. Absorberblech an von Anfang an sowie während des Betriebs mit geringstmöglichem technischem Aufwand dauerhaft angebracht werden kann und wodurch sichergestellt ist, daß stets ein optimaler Kontakt zwischen Rohrleitung und Absorberblech besteht, damit die Wärmeübertragung vom Absorberblech zur Rohrleitung in stets optimaler Weise erfolgen kann.

Diese Aufgabe wird gemäß der Erfindung gelöst durch die im Hauptanspruch der vorstehend wiedergegebenen Patentansprüche gekennzeichneten Verfahrensmerkmale. Der Vorteil des erfindungsgemäßen Verfahrens besteht vor allem darin, daß Fertigungstoleranzen oder Abweichungen hiervon bei Rohrleitung bzw. Absorberblech in Bezug auf die Güte des Kontakts zwischen Absorberblech und Rohrleitung und damit auf den Wirkungsgrad der Wärmeübertragung zwischen diesen Teilen keine nachteilige Rolle mehr spielen, da etwaige Abweichungen bezüglich der Formgenauigkeit von Absorberblech und/oder Rohrleitung durch die nachträgliche Verformung der Wandung der Rohrleitung ausgeglichen werden. Die gemäß der Erfindung vorgesehene Verformung der Rohrleitung erfolgt eben so lange, bis sich deren Wandung an die Wirkflanken der Haltevorrichtung fest und lückenlos anpreßt, wobei die ovale Querschnittsform im Verhältnis zum Rohrinhalt eine große Wärmeübertragungsfläche zwischen der Haltevorrichtung und Rohrleitung ergibt.

Nach einer weiteren vorteilhaften Ausgestaltung des erfindungsgemäßen Verfahrens soll die Form des Querschnitts der Rohrleitung und der Haltevorrichtung so aufeinander abgestimmt werden, daß der Querschnitt der Rohrleitung auch nach deren Verformung noch einen von der Kreisform abweichenden Querschnitt aufweist, die eine spätere weitere Verformung in Richtung auf die Kreisform hin zuläßt. Hierdurch wird erreicht, daß für das Bestreben der Wandung der Rohrleitung, ihren Querschnitt unter Druckeinwirkung möglichst der Kreisform anzupassen, immer noch ein von der Kreisform abweichender Querschnitt in Ellipsen-, Ei- oder Birnenform als "Nachverformungs-Reserve" verbleibt. Diese Reserve läßt im Bedarfsfalle ein späteres Nachrunden der Rohrleitung auch noch nach jahrelangem Betrieb der Absorberanlage ohne deren Demontage zu, wenn sich nämlich der ursprünglich feste Kontakt zwischen der Haltevorrichtung und der Rohrleitung im Laufe der Zeit gelockert haben sollte.

Die Aufrechterhaltung eines guten Kontaktes zwischen Haltevorrichtung und Rohrleitung und damit einer guten Wärmeübertragung zwischen denselben wird zusätzlich durch das in der Rohrleitung zirkulierende, unter hydraulischem Betriebsdruck stehende Betriebsmedium unterstützt, das die Wandung der Rohrleitung an die abgeflachten Stellen der

0132809

Wirkflanken der Haltevorrichtung, zumindest während der Betriebszeit der Absorberanlage, gleichmäßig anpreßt und auf diese Weise eine optimale Wärmeübertragung ermöglicht.

Das erfindungsgemäße Verfahren wird nachfolgend anhand bevorzugter Ausführungsbeispiele sowie anhand der in der Anlage beigefügten Zeichnung näher erläutert. Es zeigen:

Fig. 1 ein nach dem Stand der Technik hergestelltes Absorberblech mit angeformter Haltevorrichtung und einer an dieser angebrachten, im Querschnitt kreisförmigen Rohrleitung;

Fig. 2 ein gemäß einer ersten Ausführungsform der Erfindung hergestelltes Absorberblech mit angeformter Haltevorrichtung und einer an dieser angebrachten, im Querschnitt elliptischen Rohrleitung;

Fig. 3 eine Haltevorrichtung mit elliptischer Rohröffnung nach Fig. 2 in vergrößerter Darstellung, wobei der Querschnitt einer daran anzuordnenden Rohrleitung vor ihrer Montage gestrichelt gezeichnet ist;

Fig. 4 eine Darstellung der mittels einer Stanze bewirkten Verformung der Rohrleitung aus ihrer in Fig. 2 gestrichelt gezeichneten Lieferform in ihre in Fig. 2 mit durchgehender Linie gezeichnete Gebrauchsform;

Fig. 5 eine Darstellung der mittels hydraulisch erzeugten Innendrucks eines Druckmediums bewirkten Verformung der Rohrleitung aus ihrer in Fig. 2 gestrichelt gezeichneten Lieferform in ihre in Fig. 2 mit durchgehender Linie gezeichnete Gebrauchsform;

Fig. 6 ein gemäß einer zweiten Ausführungsform der Erfindung hergestelltes Absorberblech mit angeformter Haltevorrichtung und einer an dieser angebrachten, im Querschnitt birnen- oder kegelförmigen Rohrleitung;

Fig. 7 eine Haltevorrichtung mit birnen- oder kegelförmiger Rohröffnung nach Fig. 6 in vergrößerter Darstellung mit einer in diese eingeführten Rohrleitung entsprechenden Querschnitts;

Fig. 8 eine Darstellung der mittels einer Stanze bewirkten Verformung der Rohrleitung gemäß Fig. 7 in
ihre Gebrauchslage;

Fig. 9 eine Darstellung der mittels hydraulisch erzeugten
Innendrucks eines Druckmediums bewirkten Verformung
der Rohrleitung der Rohrleitung gemäß Fig. 7 in
ihre Gebrauchslage;

Fig. 10 ein gemäß einer dritten Ausführungsform der Erfindung hergestelltes Absorberblech in Lieferform,
wobei die beiden seitlich der Haltevorrichtung
verlaufenden Blechteile auf Seiten der Haltevorrichtung konkav gewölbt sind;

Fig. 11 das Absorberblech gemäß Fig. 10 vor Montage der
Rohrleitung, wobei es durch Biegekräfte in angegebener Pfeilrichtung im elastischen Bereich derart verformt wird, daß die Rohrleitung leicht in
die Haltevorrichtung eingeführt werden kann;

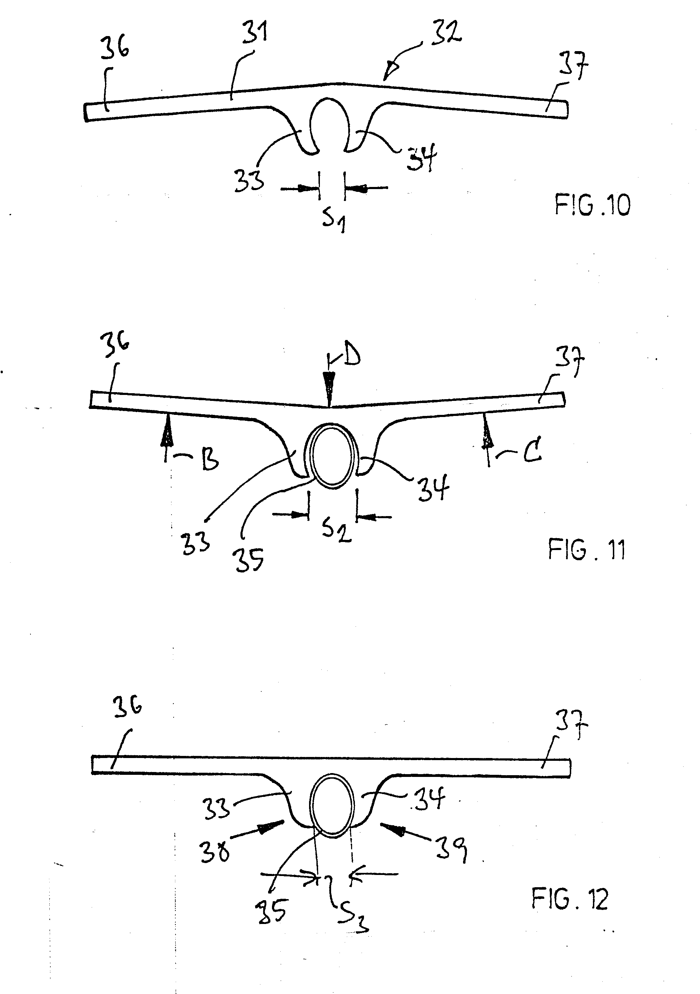

Fig. 12 das Absorberblech gemäß Fig. 10 nach erfolgter
Montage der Rohrleitung, wobei es nach Ende des
in Fig. 11 gezeigten Biegevorgangs seine Gebrauchslage einnimmt, in der die beiden Haltebacken der
Haltevorrichtung an der Rohrleitung federnd anliegen;

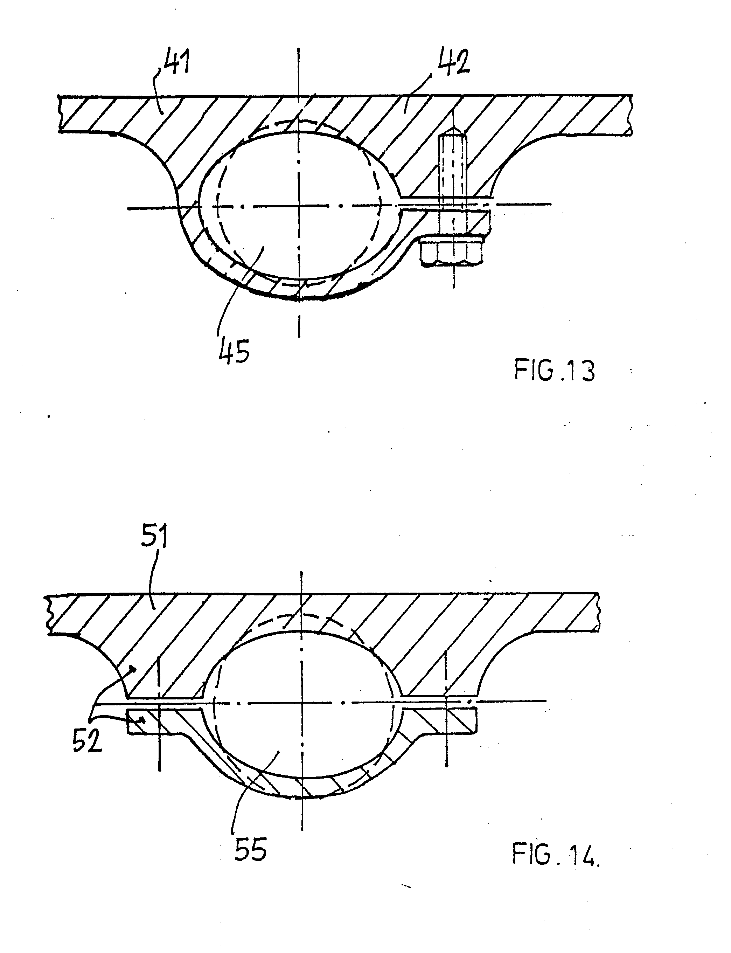

Fig. 13 ein gemäß der vierten Ausführungsform der Erfindung hergestelltes Absorberblech und eine daran
angebrachte, im Querschnitt elliptische Rohrleitung,
deren Hauptachse zur Absorberblechebene etwa parallel verläuft, und die mittels eines sie übergreifenden Bügels und lösbarer Befestigungsmittel am Absorberblech befestigt wird;

Fig. 14 eine der Fig. 13 entsprechende Anordnung der Rohrleitung an einem Absorberblech, wobei die Rohrleitung mittels eines beidseitig am Absorberblech zu
befestigenden Haltebügels an diesem in Gebrauchslage
gesichert ist;

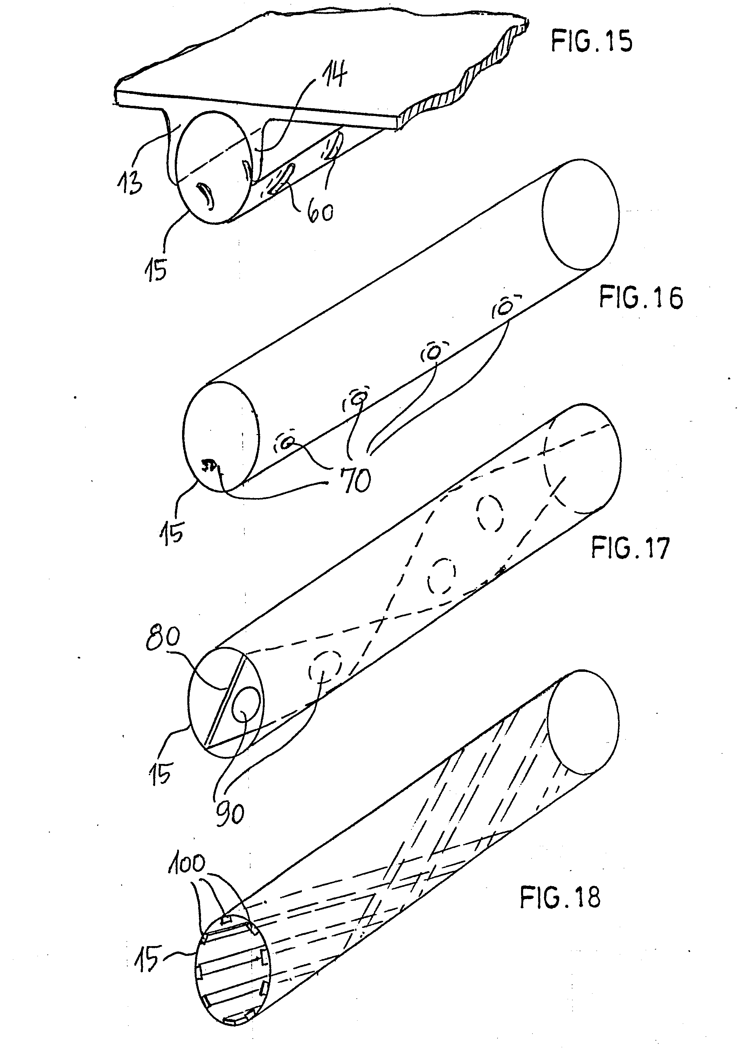

Fig. 15 einen Teilausschnitt aus einem Absorberblech
        mit einer daran angebrachten Rohrleitung mit
        an dieser ausgebildeten länglichen Eindrückungen;

Fig. 16 ein Stück einer Rohrleitung mit an dieser ausgebildeten punktförmigen Eindrückungen;

Fig. 17 ein Stück einer Rohrleitung mit einem in dieser
        in Gebrauchslage angeordneten gewendeltem Blechstreifen, in dem Löcher ausgestanzt sind, und

Fig. 18 ein Stück einer Rohrleitung mit an deren Innenwand angeordneten erhabenen Stegen od. dgl., die
        in Längsrichtung der Rohrleitung gewendelt sind.

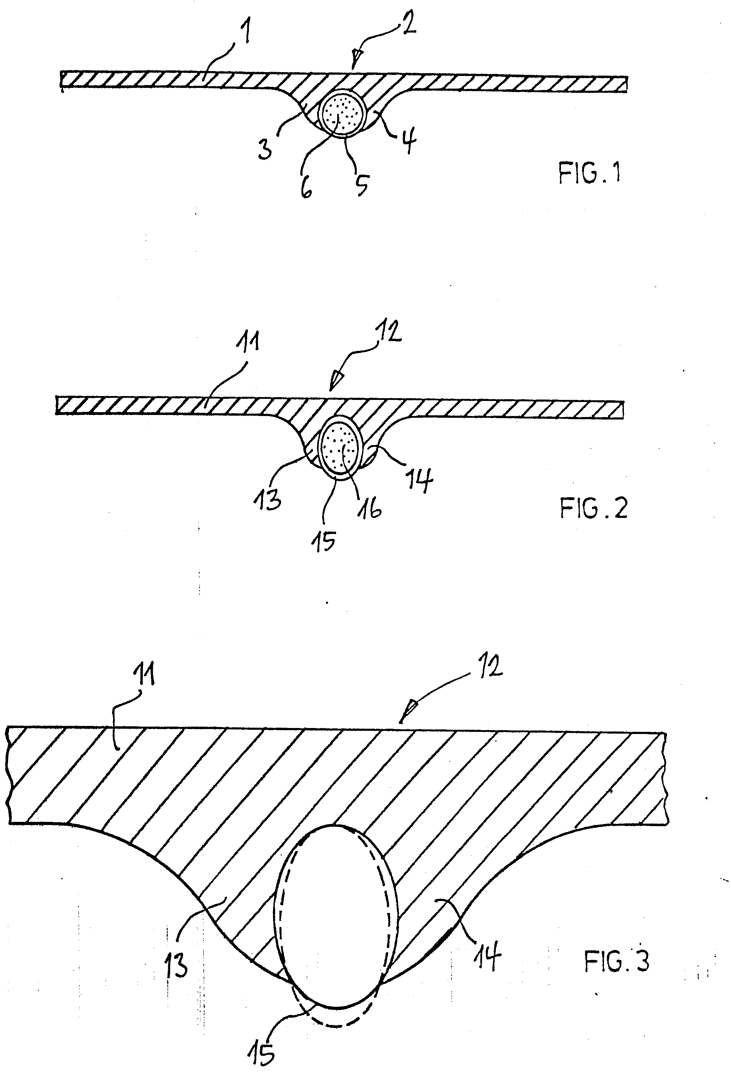

Ein in Fig. 1 gezeigtes herkömmliches Absorberblech 1 weist eine Haltevorrchtung 2 mit zwei Haltebacken 3,4 auf, zwischen denen eine im Querschnitt üblicherweise kreisförmige Rohrleitung 5 gehaltert wird. Die Güte der Wärmeübertragung vom Absorberblech 1 auf das in der Rohrleitung 5 enthaltene Betriebsmedium 6 hängt von der Intensität des Kontaktes zwischen denselben ab. Demzufolge sollte die Rohrleitung 5 so fest wie möglich zwischen den beiden Haltebacken 3,4 der Haltevorrichtung 2 eingeklemmt sein. Dieses ist jedoch aus vielen Gründen leider nicht immer gewährleistet beziehungsweise kann sich im Laufe der Zeit so verschlechtern, daß von einem innigen Kontakt zwischen den die Wärmeübertragung bewirkenden Flächen kaum mehr gesprochen werden kann. Insbesondere eine nachträgliche Verbesserung und/oder Nachbesserung eines mangelhaften Kontaktes zwischen einer im Querschnitt kreisförmigen Rohrleitung und den Wirkflanken der Haltebacken 3,4 der Haltevorrichtung 2 ist praktisch nicht möglich. Durch die nach bekanntem Verfahren hergestellte Absorberanordnung kann eine optimale Wärmeübertragung von einem Absorberblech 1 auf das Betriebsmedium 6 keinesfalls erzielt werden.

Fig. 2 zeigt nun in einer ersten Ausführungsform ein Verfahren gemäß der Erfindung, wonach ein Absorberblech 11 eine Haltevorrichtung 12 mit zwei Haltebacken 13,14 aufweist, deren Wirkflanken im Querschnitt die Form einer Ellipse zur Aufnahme einer im Querschnitt ebenfalls elliptischen Rohrleitung 15 aufweist, in welcher ein Betriebsmedium 16 enthalten ist.

Wie in Fig. 3 in vergrößerter Darstellung verdeutlicht wird, kann bei dem erfindungsgemäßen Verfahren jedoch - im Gegensatz zu dem oben geschilderten Verfahren nach dem Stand der Technik - als Vormaterial eine Rohrleitung 15 verwendet werden, die nicht nur eine von der Kreisform abweichenden elliptischen Querschnitt aufweist, sondern deren elliptischer Querschnitt auch vom elliptischen Querschnitt der Wirkflanken der Haltevorrichtung 12 abweicht. Beispielsweise habe die angelieferte Rohrleitung
15 einen im Vergleich zum Ellipsenquerschnitt der Wirkflanken der Haltevorrichtung 12 flacheren Ellipsenquerschnitt, wie durch eine strichpunktierte Linie dargestellt
ist. Diese Querschnittsabweichung ist bei dem erfindungsgemäßen Verfahren nicht nur möglich, sondern geradezu gewollt. Dadurch kann die Rohrleitung von unten oder durch
die Öffnung der Haltevorrichtung in diese eingebracht werden, was besonders bei gebogenen Rohrleitungen von mehreren
Metern Länge wichtig ist.

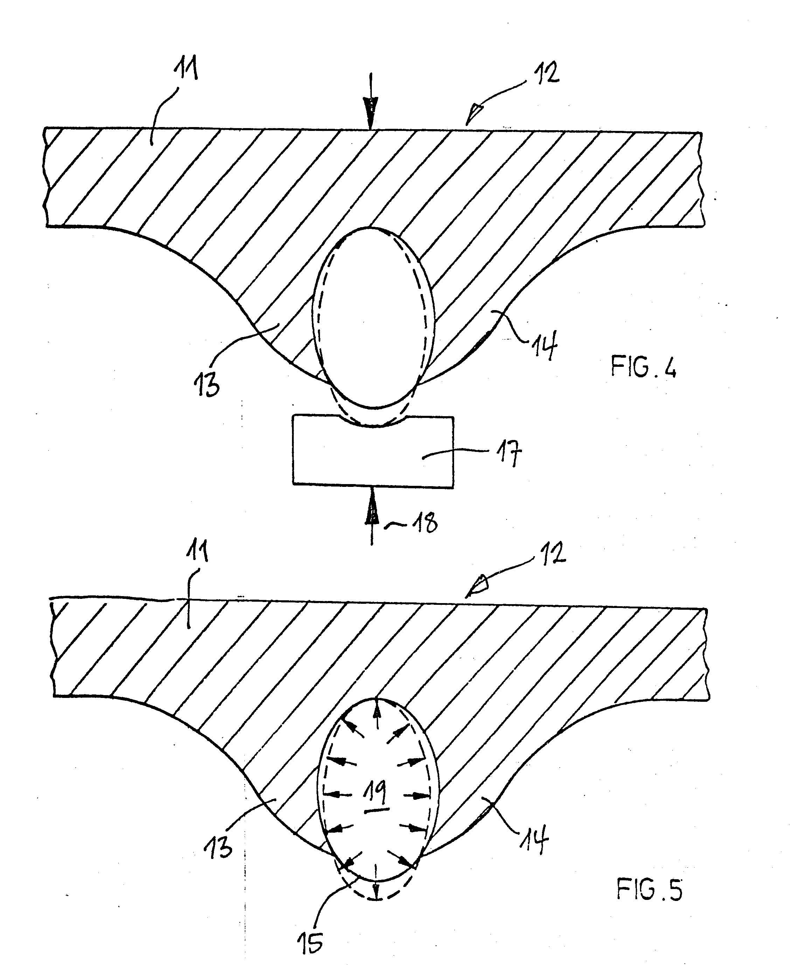

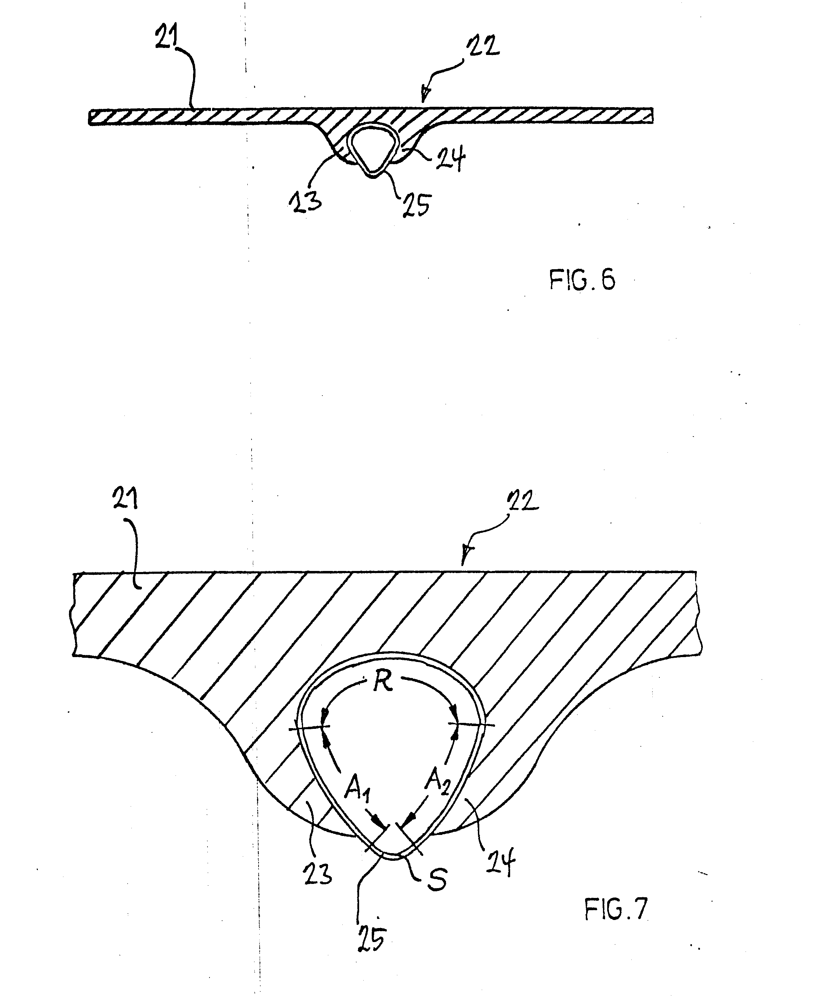

Durch nachträgliche Druckbeaufschlagung auf die solchermaßen vorgeformte Rohrleitung 15 kann deren Querschnitt
vollkommen an den vorgegebenen Querschnitt der Wirkflanken
der Haltevorrichtung 12 angepaßt werden, wie in den
nachfolgenden Fign. 4 und 5 gezeigt ist.

Die Rohrleitung kann weiterhin unter Druck im Querschnitt
über den ursprünglichen Querschnitt der Haltevorrichtung
hinaus erweitert werden. Dies hat zur Folge, daß die Haltevorrichtung etwas auseinandergedrückt wird, und ein stetiger
Druck zwischen Haltevorrichtung und Rohrleitung entsteht,
der eine optimale Verbindung beider Teile ermöglicht.

Dehnt sich nun die Rohrleitung auf Grund von Wärmeentwicklung stärker aus, so hat dies zur Folge, daß die Haltevorrichtung den Druck auf die Rohrleitung verstärkt, was die
Verbindung weiter verbessert. Verringert sich der Durchmesser der Rohrleitung auf Grund von Abkühlung, so folgen
die Wirkflanken der Haltevorrichtung auf Grund des noch
vorhandenen Federdrucks dem verringerten Querschnitt der
Rohrleitung und drücken weiterhin auf die Rohrleitung, was
einen guten Kontakt aufrechterhält.

In Fig. 4 wird die ursprünglich mit sehr flachem Ellipsenquerschnitt angelieferte Rohrleitung 15 mittels einer
Stanze 17 in Pfeilrichtung 18 in die Haltevorrichtung 12 derart hineingedrückt, daß sich ihre Wandung gleichmäßig an die Wirkflanken der Haltevorrichtung des Absorberblechs 11 anlegt, wie durch die durchgezogene Linie angedeutet ist.

Fig. 5 zeigt ein Verfahren gemäß der Erfindung, wonach die Rohrleitung 15 mit einem Druckmedium 19 gefüllt wird, das mittels einer hydraulischen Pumpe derart unter Druck gesetzt werden kann, daß sich die Rohrleitung 15 in ihrem Bestreben, ihre Ellipsenform einer Kreisform anzunähern, an die von den Wirkflanken der Haltevorrichtung 12 vorgegebene rundere Ellipsenform anlegt, wie durch die durchgezogene Linie gezeigt ist.

Fig. 6 zeigt ein Absorberblech 21 mit einer Haltevorrichtung 22, deren zwischen ihren Haltebacken 23,24 vorhandene Wirkflanken eine Rohröffnung von birnen- oder kegelförmigem Querschnitt für eine Rohrleitung 25 entsprechenden Querschnitts umschließen.

Fig. 7 zeigt in Vergrößerung einen Ausschnitt aus einer derart. geformten Haltevorrichtung 22 mit einer Rohrleitung 25 entsprechenden Querschnitts. Dieser Querschnitt weist an seiner Basis etwa kreisförmige Kontur $R$, an seinen Seitenflanken $A_1, A_2$ eine leicht gebogene Kontur und an seiner Spitze $S$ eine abgerundete Kontur von kleinem Radius auf.

Übt man auf eine Rohrleitung 25 dieses Querschnitts einen Druck aus, so nimmt sie den gleichen Querschnitt, wie den, den die Haltevorrichtung 22 aufweist, ein.

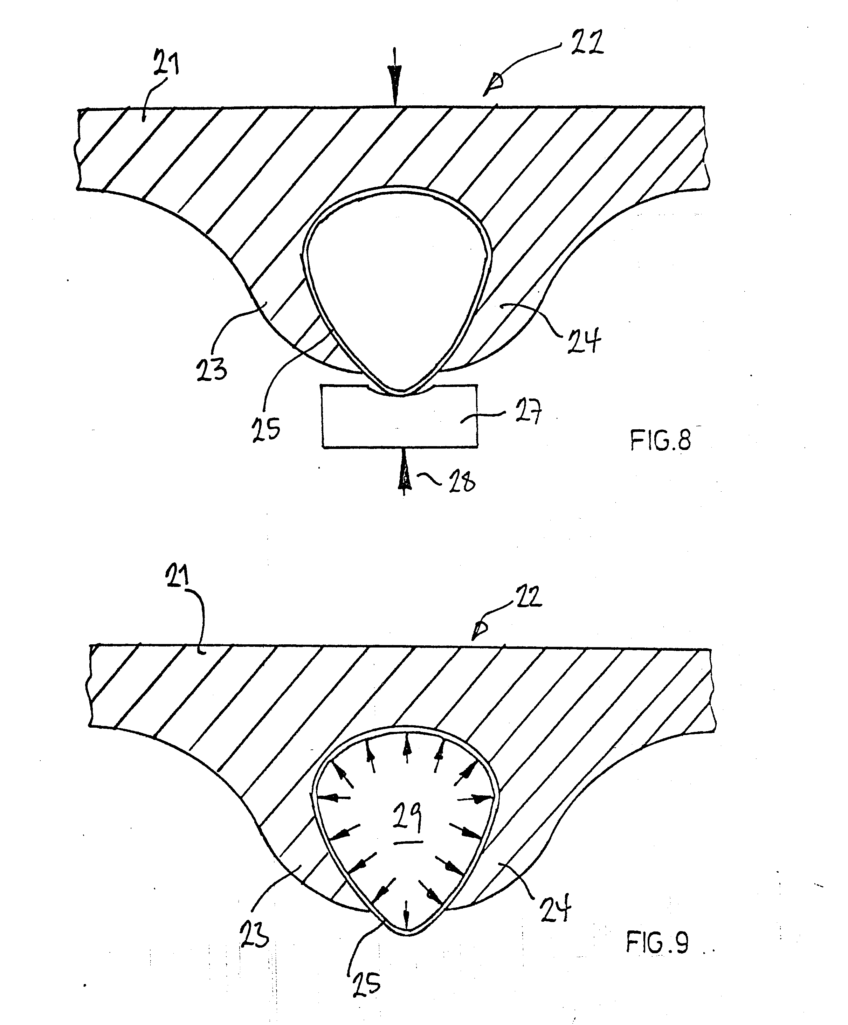

Dieser Druck kann auf die Wandung der Rohrleitung 25 sowohl von außen mittels einer in Pfeilrichtung 28 wirkenden Stanze 27 (siehe Fig. 8) als auch von innen mittels eines auf die Wandung von innen wirkenden, von einer Hydraulikpumpe unter Druck setzbaren Druckmediums 29 (siehe Fig. 9) erzeugt werden.

Fig. 10 zeigt ein Absorberblech 31 zur Verwendung bei der Durchführung des erfindungsgemäßen Verfahrens, das schon beim Walzen mit einer Form hergestellt wird, wobei seine beiden Seitenteile 36,37 bezüglich seiner die Haltevorrichtung 32 aufweisenden Seite leicht konkav gewölbt sind, wie Fig. 10 zeigt. Dabei weisen die beiden Haltebacken 33,34 an ihrer Öffnung einen Abstand $S_1$ auf.

Bei Montage einer Rohrleitung 35 werden auf das Absorberblech 31 Kräfte $B, C, D$ ausgeübt, wobei sich letzteres in der in Fig. 11 gezeigten Weise elastisch verformt und sich die Öffnung zwischen den beiden Haltebacken 33,34 zu einem Abstand $S_2$ erweitert.

Nach Einführung der Rohrleitung 35 in die Haltevorrichtung 32 läßt man nach Unterbrechung der Biegekräfte $B, C, D$ das Absorberblech 31 in die in Fig. 12 gezeigte Lage sich durch seine Eigenelastizität zurückverformen, wonach die beiden Haltebacken 33,34 nunmehr in den Pfeilrichtungen 38,39 fest auf die Wandung der Rohrleitung 35 drücken. Hierdurch sowie ggf. durch zusätzlichen Druck auf die Rohrleitung, wie vorstehend anhand der Fig. 4 und 5 beschrieben, ergibt sich ein inniger Kontakt zwischen der Haltevorrichtung 32 des Absorberblechs 31 und der Rohrleitung 35 und damit eine optimale Wärmeübertragung von jenem zu dieser.

Schließlich zeigen die Fig. 13 und 14 noch einige Varianten der Ausgestaltung einer Haltevorrichtung 42,52 für eine Rohrleitung 45,55 an einem Absorberblech 41,51. Diese kommen insbesondere dann zum Zuge, wenn bauliche Gründe bzw. Platzmangel es erforderlich machen, die elliptischen Querschnitt aufweisenden Rohrleitungen 45,55 an dem sie tragenden Absorberblech 41,51 so anzuordnen, daß ihre elliptische Hauptachse zur Achse des Absorberblechs 41,51 etwa parallel verläuft. Auf diese Weise kann die Absorberabmessung senkrecht zur Plattenebene des Absorberblechs 41,51 verringert werden. Fig. 14 zeigt eine zweiteilige Haltevorrichtung 52.

Die Erweiterung der Rohrleitung zur optimalen Anlage an den Wirkflanken der Haltevorrichtung könnte außer durch den vorstehend bereits erwähnten Druck auf die Rohrleitung von außen (siehe Fign. 4 und 8) oder durch die vorstehend genannte Möglichkeit einer Druckausübung auf die Wandung der Rohrleitung mittels eines hydraulisch unter Druck setzbaren Druckmediums von innen (siehe Fign. 5 und 9) bewerkstelligt werden. Es bestünde daneben auch noch die Möglichkeit, durch die Rohrleitung ein beispielsweise eiförmiges Metallstück, das die Form des gewünschten Endquerschnitts der Rohrleitung aufweist, in axialer Richtung hindurchzuziehen oder hindurchzudrücken. Dabei muß die Wandung der Rohrleitung lediglich über ihre Elastizitätsgrenze hinaus verformt werden, damit es nach der Verformung die gewollte Form auch beibehält.

Es sei schließlich noch hervorgehoben, daß die birnen- oder kegelförmige Formgebung des Querschnitts einer Haltevorrichtung, wie sie vorstehend anhand der Fign. 6 bis 9 beschrieben wurde, folgende Vorteile aufweist:

Die Rohrleitung dehnt sich nicht an seiner runden Stelle (R), sondern an seinen bogenförmig gekrümmten Stellen ($A_1$, $A_2$). Somit können die beiden Haltebacken 23, 24 auf die sich dehnen wollende Rohrleitung 25 einen entsprechenden Gegendruck ausüben und drücken diese umso fester in den runden Bereich (R) der Aussparung zwischen den beiden Haltebacken 23, 24 hinein und verbessern auf diese Weise die Intensität des Kontaktes zwischen Absorberblech 21 und Rohrleitung 25 (Fig. 7).

Abschließend wird noch einmal in Zusammenfassung der vorstehenden Erläuterungen des Erfindungsgegenstandes betont, daß der Clou des erfindungsgemäßen Verfahrens darin beruht, daß durch Verwendung von Rohrleitungen, deren Querschnitt nicht nur bei ihrer Anlieferung vom Erst-Erzeuger mehr oder weniger stark vom Kreisquerschnitt abweicht, sondern auch noch nach ihrer Verarbeitung und Montage an den Absorberblechen immer noch über eine "Reserve zum Nachrunden" verfügt, eine optimale Kontaktherstellung zwischen den wärmeübertragenden Flächen möglich wird. Ein immer noch von einer Kreisform abweichender Rohrquerschnitt kann bei später notwendig werdender Nachverformung stets in Richtung auf die Kreisform nachverformt werden, ein schon existenter kreisförmiger Rohrquerschnitt nicht.

Insofern ist die Absorberblechanordnung gemäß Fig. 1 qualitätsmäßig nicht verbesserbar, da schon das Ausgangsmaterial für die Rohrleitung im Querschnitt kreisförmig ist. Hier kann nur eine nachträgliche Bearbeitung der die Rohrleitung fassenden Haltevorrichtung zu einem intensiveren Kontakt zwischen dieser und der Rohrleitung führen.

An der am Absorberblech 11 angebrachten Rohrleitung 15 kann gemäß der Erfindung an deren in Gebrauchslage freiliegendem Bereich (das heißt im Bereich außerhalb der beiden Haltebacken 13,14) eine oder mehrere Reihen von länglichen Einkerbungen bzw. Eindrückungen 60 von außen her an der Rohrleitungswand ausgebildet sein. Die zum Rohrinneren hin als längliche Erhebungen in Erscheinung tretenden Buckel sorgen dafür, daß das durch die Rohrleitung 15 hindurchströmende Betriebsmedium 16 zu einer Spiralbewegung verwirbelt und daher in einen Rechts- oder Linksdrall versetzt wird. Auf diese Weise wird der Wärmeübergang zwischen Rohrleitung 15 und Betriebsmedium 16 verbessert. Die Einkerbungen 60 sollten mit ihrer Längsachse zur Mittelachse der Rohrleitung 15 einen Winkel von etwa 45° bilden. Die Einkerbungen 60 sind spitzwinkelig und daher formstabil. Fig. 15.

Anstelle der länglichen Einkerbungen 60 könnte man auch, wie Fig. 16 zeigt, etwa kreisrunde, punktförmige Eindrückungen 70 vorsehen. Hiermit läßt sich zwar kein Rechts- oder Linksdrall erzeugen, aber eine Verwirbelung des Betriebsmediums 16 findet dennoch statt, da dessen Strömung nicht laminar, sondern turbulent erfolgt.

Die Eindrückungen 60,70 könnten in einem einzigen Stanzvorgang, gleichzeitig mit dem Eindrücken der Rohrleitung 15 zwischen die Haltebacken 13,14 des Absorberbleches 11, an der Unterseite der Rohrleitung 15 ausgebildet werden. Im Bereich der wärmeübertragenden Flächen zwischen den Haltebacken 13,14 bleibt die Rohrleitungswand glatt. Nur die im unteren Drittel der Rohrleitung 15 ausgebildeten Einkerbungen 60,70 erzeugen die gewünschte Verwirbelung des Betriebsmediums 16.

Zur Verbesserung der Wärmeübertragung von der Rohrleitung 15 auf das Betriebsmedium 16 ist eine möglichst hohe Reibung zwischen beiden erfoderlich. Diese wird erreicht, indem die Durchlaufgeschwindigkeit des Wärmeträgermediums bzw. Betriebsmittels 16 durch die Rohrleitung 15 möglichst hoch ist. Da jedoch eine zu hohe Durchlaufmenge den Wirkungsgrad des Sonnenkollektors reduzieren würde, ist gemäß der Erfindung vorgesehen, in der Rohrleitung 15 ein wendelartig gedrehtes Flachblech 80 einzulegen, wie Fig. 17 zeigt. Das Flachblech 80 bewirkt, daß sich die Wärmeträgerflüssigkeit bzw. das Betriebsmittel 16 in der Rohrleitung 15 um deren Achse herumdreht, was den Wärmeübergang bzw. die Wärmeübertragung verbessert, weil hierdurch die Fließgeschwindigkeit des Betriebsmittels 16 erhöht wird. In dem Flachblech 80 sind Ausstanzungen 90 zur Verwirbelung von 16 vorgesehen. Es ist bekannt, die Rohrleitungswand mit Rillen (ähnlich einem Gewehrlauf) zu versehen, die die Aufgabe haben, die Flüssigkeit axial zu drehen. Der Nachteil dieses Verfahrens ist jedoch, daß an den gezogenen Riefen bzw. Rillen im Rohr dessen Wandstärke geschwächt wird.

Gemäß der Erfindung ist daher vorgesehen, die Wand der Rohrleitung 15 innenseitig mit Stegen 100 zu versehen, die in Achsrichtung der Rohrleitung 15 spiralförmig an der Rohrleitungswand angeordnet sind, aus den vorstehend bereits genannten Gründen. Fig. 18.

Schließlich wird gemäß der Erfindung noch vorgeschlagen, das Einbringen der ovalen Rohrleitung 15 zwischen die Haltebacken 13,14 des Absorberbleches 11 dadurch zu bewirken, daß die Aluminiumprofile auf sehr hohe Temperatur erhitzt werden, wobei sich der Querschnitt der Öffnung zwischen den Haltebacken 13,14 vergrößert. Bei dieser hohen Temperatur wird die Rohrleitung 15 eingeführt. Nach Abkühlung der Aluminiumprofile ziehen sich diese zusammen und pressen sich fest an die Rohrleitung 15, was für den Wärmeübergang zwischen Absorberblech 11 und Rohrleitung 15 sehr günstig ist.

Friedrich Müller
Im Mühlfeld 31
D-7180 Crailsheim

Patentansprüche

1. Verfahren zur Herstellung eines Absorbers zur Wärmegewinnung oder Kälteerzeugung, insbesondere für einen
Sonnenkollektor, ein Energiedach, einen Energiezaun,
eine Kühlvorrichtung od. dgl., mit einem Absorberblech
und einem an diesem angeordneten System aus flüssigkeitsdurchströmten Rohrleitungen, die mittels einer am
Absorberblech angeordneten, längs desselben verlaufenden,
die Wärmeübertragung bewirkenden Haltevorrichtung in
ihrer Gebrauchslage gesichert sind, dadurch gekennzeichnet,
daß als Ausgangsmaterial eine im Querschnitt eine
elliptische, eiförmige, birnenförmige oder anderweitig
von der Kreisform abweichende Form aufweisende Rohrleitung
(15,25) verwendet wird, die zwischen den Wirkflanken
der Haltevorrichtung (12,22) angeordnet und anschließend mittels einer auf ihre Wandung wirkenden Druckkraft (18,19) derart verformt wird, daß ihre Wandung
an den Wirkflanken der Haltevorrichtung (12,22)
fest und lückenlos anliegt.

2. Verfahren nach Anspruch 1, dadurch gekennzeichnet, daß
die Form des Querschnitts der Rohrleitung (15,25) und der
Haltevorrichtung (12,22) so aufeinander abgestimmt wird,
daß der Querschnitt der Rohrleitung (15,25) auch nach deren
Verformung noch einen von der Kreisform abweichenden
Querschnitt aufweist, die eine spätere weitere Verformung
in Richtung auf die Kreisform hin zuläßt.

3. Verfahren nach Anspruch 2, dadurch gekennzeichnet, daß
bei im Laufe der Zeit möglicherweise eintretender Lockerung des Kontaktes zwischen der Haltevorrichtung (12,22) und
der Rohrleitung (15,25) dieser mangelhaft gewordene Kontakt
durch wiederholte Druckeinwirkung auf die Rohrleitung
(15,25) wiederhergestellt wird.

4. Verfahren nach einem der Ansprüche 1 bis 3, dadurch gekennzeichnet, daß die Form des Querschnitts der Rohrleitung (15,25) und der Haltevorrichtung (12,22) so aufeinander abgestimmt wird, daß bei Druckeinwirkung auf die Rohrleitung (15,25) diese sich gleichmäßig fest an die Wirkflanken der Haltevorrichtung (12,22) anlegt.

5. Verfahren nach einem der Ansprüche 1 bis 4, dadurch gekennzeichnet, daß die Druckeinwirkung auf die Rohrleitung (15,25) von außen her mittels einer auf die Rohrleitung (15,25) drückenden Stanze (17,27) od. dgl. erfolgt.

6. Verfahren nach einem der Ansprüche 1 bis 4, dadurch gekennzeichnet, daß die Druckeinwirkung auf die Rohrleitung (15,25) von innen her erfolgt.

7. Verfahren nach Anspruch 6, dadurch gekennzeichnet, daß die Rohrleitung (15,25) mit einem flüssigen oder gasförmigen Druckmedium (19,29) gefüllt ist, daß das Druckmedium (19,29) mittels einer Pumpe od. dgl. unter hydraulischen oder pneumatischen Druck von genau dosierbarer Stärke gesetzt wird, und daß daß hierdurch die Rohrleitung (15,25) in radialer Richtung nach außen hin so verformt wird, daß sich ihre Wandung fest an den Wirkflanken der Haltevorrichtung (12,22) anlegt.

8. Verfahren nach Anspruch 6, dadurch gekennzeichnet, daß durch die Rohrleitung (15,25) in axialer Richtung ein Formstück mit bestimmter Form und Größe hindurchgezogen oder -gedrückt wird, wobei die Wandung der Rohrleitung (15,25) entsprechend so verformt wird, daß sie sich dicht an die Wirkflanken der Haltevorrichtung (12,22) anlegt.

0152809

9. Verfahren nach einem der Ansprüche 1 bis 8, dadurch gekennzeichnet, daß ein Absorberblech (31) verwendet wird, dessen seitlich der Haltevorrichtung (32) verlaufenden Blechteile (36,37) auf der die Haltevorrichtung (32) aufweisenden Seite in ihrer Ruhelage im Querschnitt konkav gewölbt sind, wobei die Wirkflanken der Haltevorrichtung (32) einen geringeren Abstand ($S_1$) voneinander aufweisen, als in ihrer Gebrauchslage, und daß bei Montage der Rohrleitung (35) an der Haltevorrichtung (32) die Blechteile (36,37) unterhalb der Elastizitätsgrenze elastisch derart verformt werden, daß sie etwa geradlinig zueinander fluchten, wobei infolge Auseinanderspreizens der Haltevorrichtung (32) der Abstand ($S_2$) der Wirkflanken der Haltevorrichtung (32), insbesondere im Bereich ihrer Öffnung, derart vergrößert wird, daß zwischen diese die Rohrleitung (35) eingeführt werden kann, und wonach die Wirkflanken der Haltevorrichtung (32) sich an die Wandung der Rohrleitung (35) federnd anlegen (Fig. 10-12).

FIG.1

FIG.2

FIG.3

FIG. 4

FIG. 5

FIG.6

FIG.7

FIG.8

FIG.9

0132809 .

FIG. 10

FIG. 11

FIG. 12

FIG.13

FIG.14.

0132809

FIG.15

FIG.16

FIG.17

FIG.18